# EUROPEAN PATENT APPLICATION

(11) **EP 2 012 445 A2**
(43) Date of publication of application: **07.01.2009**
(21) Application number: 08153612.0
(22) Date of filing: 28.03.2008
(51) Int. Cl.: H04B 7/08

(54) **Communication apparatus and method for controlling diversity reception**

(30) Priority: 05.07.2007 JP 2007177806
(71) Applicant: Fujitsu Ltd., Kawasaki-shi, Kanagawa 211-8588 (JP)
(72) Inventor: Hozumi, Kanji, Kawasaki-shi Kanagawa 211-8588 (JP)
(74) Representative: Wilding, Frances Ward

(57) **Abstract**

A communication apparatus is equipped with diversity reception function (101) using a plurality of reception systems (201-1 through 208-1,201-2 through 208-2) for receiving information from a transmission apparatus. The reception quality is measured (103,212) before switching (102,210) between a first state in which the diversity reception function is active and a second state in which the diversity reception function is inactive. The measured value obtained by the measurement is changed in accordance with the state after the switching. The changed value is reported (104,201-1) to the transmission apparatus as the reported value of the reception quality.

## Description

### Background of the Invention

### Field of the Invention

The present invention relates to control of diversity reception in a wireless communication system such as W-CDMA (Wideband Code Division Multiple Access).

### Description of the Related Art

Diversity reception is a technique for improving communication quality and for expanding network capacity. In the technique, a plurality of reception systems are provided in a receiver to appropriately process signals after demodulation, thereby improving the S/N (signal-to-noise) ratio of received signals.

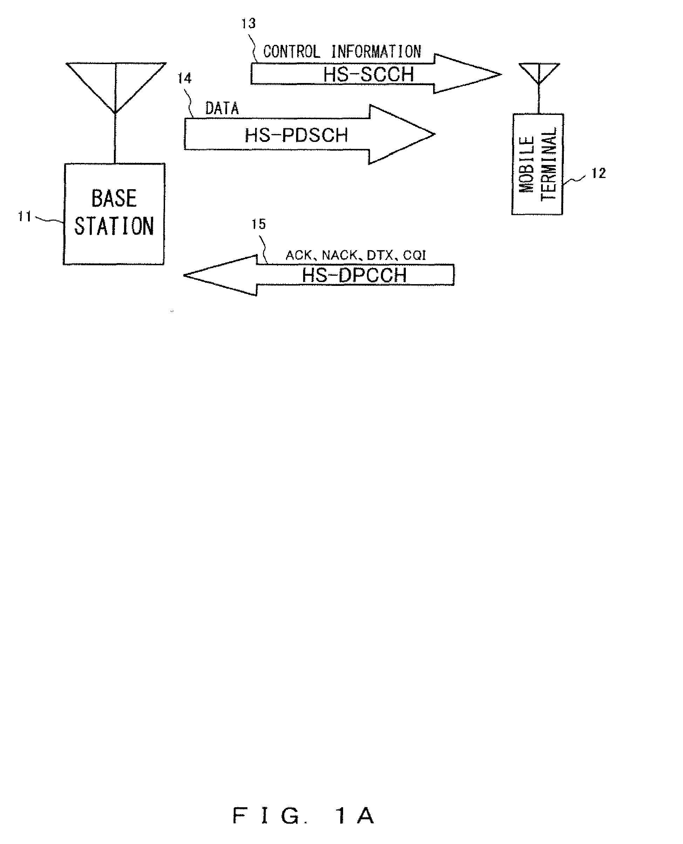

Fig. 1A shows an outline of conventional HSDPA (High Speed Downlink Packet Access) communication. Compared to conventional W-CDMA, HSDPA has three additional channels for improving communication speed. The three additional channels include:

### 1) HS-PDSCH (Highspeed-Physical Downlink Shared Channel)

HS-PDSCH 14 is a channel for mapping downlink user data transmitted from base station 11 to mobile terminal 12. The base station 11 adaptively changes the number of transmission bits, modulation method, encoding ratio, number of multiplexed codes, etc. of the channel, in accordance with CQI (Channel Quality Indicator) that indicates the reception quality of the mobile terminal 12.

### 2) HS-SCCH (Highspeed-Shared Control Channel)

HS-SCCH 13 is a downlink channel to which control information, for modulating HS-PDSCH is mapped.

### 3) HS-DPCCH (Highspeed-Dedicated Physical Control Channel)

HS-DPCCH 15 is an uplink channel for mapping information such as the result of demodulation and reception quality in the mobile terminal 1.2, the information including ACK (Acknowledgement), NACK (Negative Acknowledgement), DTX (Discontinuous Transmission), and CQI.

Meanwhile, following types of control of diversity reception are possible in a mobile terminal equipped with the diversity reception function with a plurality of reception systems .
1) Controlling ON/OFF of diversity reception as needed, for the purpose of saving power.
2) By utilizing the plurality of reception systems (branches), turning off the diversity reception dynamically to perform signal intensity measurement with a different frequency using one of the branches, while another branch is engaged in communication.

Patent document 1 specified below relates to a mobile station for generating CQI information that reflects changing direction of reception quality in HSDPA communications.

Patent Document 1: Japanese Patent Application Publication No. 2006-157133

The conventional HSDPA communication described above has the following problems.

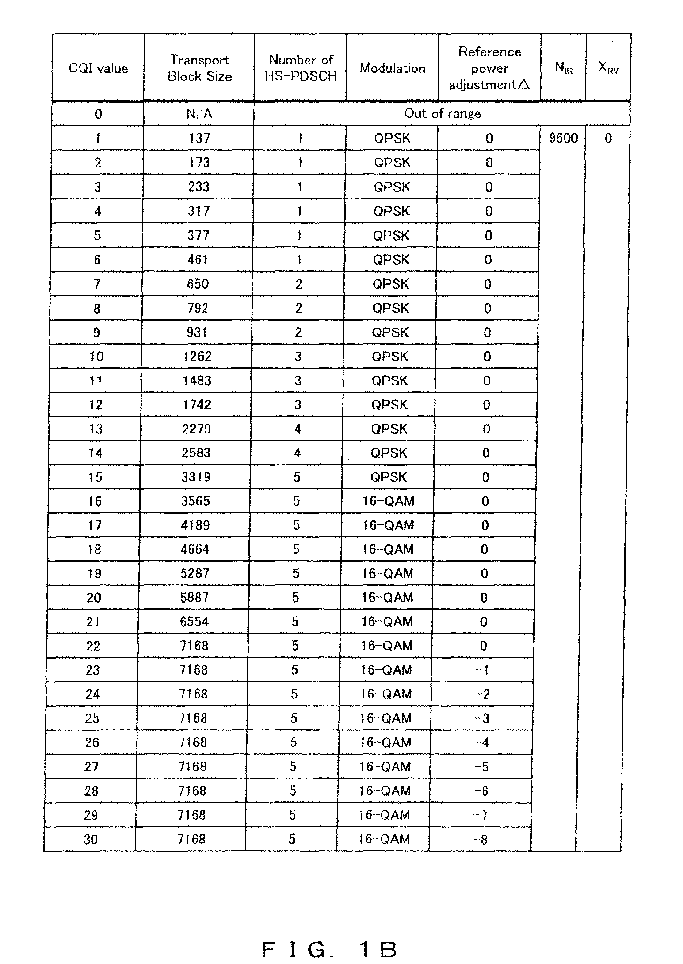

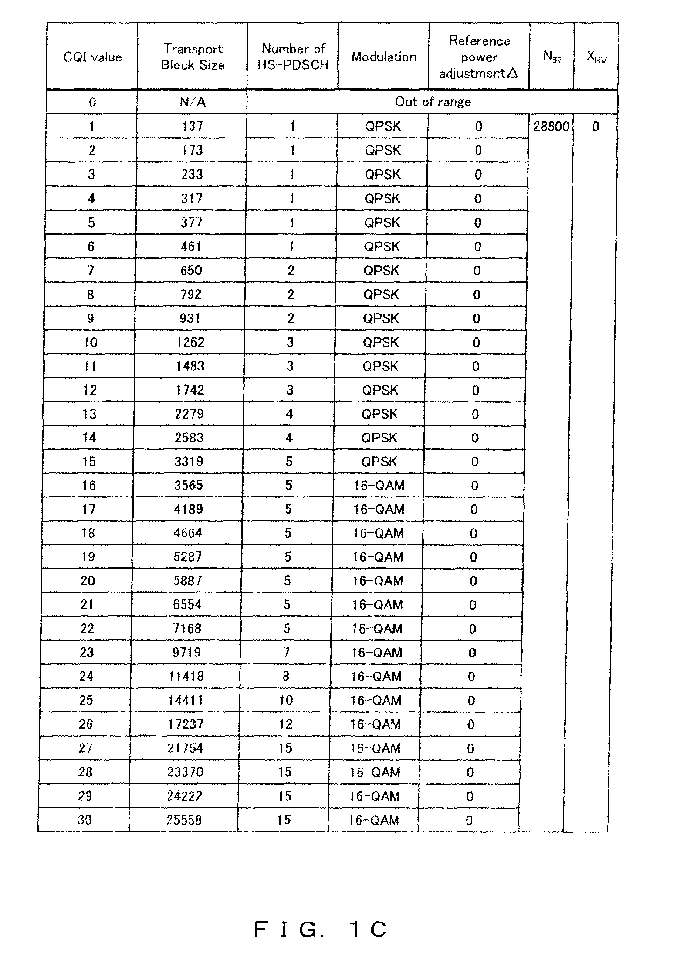

HSDPA communication uses a CQI table corresponding to the category of mobile terminals, to perform adaptive control of HS-PDSCH in accordance with the CQI. Fig. 1B and Fig. 1C show CQI tables used for mobile terminals in categories 5 and 10, specified by 3GPP (Third Generation Partnership Project) TS25.214.

The CQI tables define the number of transmission bits (transport block size), number of multiplexed codes (number of HS-PDSCHs), modulation method, transmission power offset, etc. for CQI values 1-30. The larger the CQI value, the higher the throughput. N_{IR} and X_{RV} are parameters related to data redundancy.

During HSDPA communication, the mobile terminal continuously measures the communication quality (CQI) using CPICH (Common Pilot Channel), to perform control in which the block error rate (BLER) of HS-PDSCH is kept constant. However, when the ON/OFF of diversity reception is dynamically controlled for measurement with a different frequency or saving power while the mobile terminal is engaged in communication, it causes a rapid change of the current diversity reception gain. Thus, the demodulation capability of the mobile terminal does not correspond to CQI for a certain period, resulting in the degradation of throughput. The problems specifically occur as follows.

### 1) When switching diversity reception from ON to OFF

The error rate increases due to rapid gain depression, causing more retransmission and putting a huge load on the network. A certain period of time is required before the error rate becomes normal for the state in which the diversity reception is OFF.

### 2) When switching diversity reception from OFF to ON

The communication quality becomes excessive for a certain period due to the gain increase, causing the following problems.
- In the case of using a CQI table as shown in Fig. 1B according which the transmission power is reduced when the CQI exceeds a predetermined valve (in Fig 1B, with CQI values over 22), there occurs a state in which the transmission power from the base station through the HS-PDSCH is not lowered while it could be, resulting in the overuse of network resources.
- In the case of using a CQI table as shown in Fig. 1C according which the number of transmission bits increases in accordance with the increase of the CQI value, there occurs a state where the throughput is kept low while higher throughput is available for the user.

### Summary of the Invention

It is desirable when switching ON/OFF of diversity reception in a wireless communication system, to keep the communication quality of a mobile terminal constant after the switching.

A communication apparatus disclosed herein is equipped with a diversity reception function using a plurality of reception systems for receiving information corresponding to the reception quality from a transmission apparatus. The communication apparatus comprises a switching device, a measurement device, and a transmission device.

The switching device performs switching between a first state where the diversity reception is active and a second state where the diversity reception is inactive. The measurement device measures the reception quality before the switching, and changes the measured value in accordance with the state after the switching. The transmission device transmits the changed measured value to the transmission apparatus as the reported value of the reception quality.

### Brief Description of the Drawings

Fig. 1A is a diagram showing an outline of HSDPA communication.
Fig. 1B is a diagram showing a CQI table for category 5.
Fig. 1C is a diagram showing a CQI table for category 10.
Fig. 2 is a diagram showing a principle of a communication apparatus according to an embodiment of the present invention.
Fig. 3A is a block diagram of a wireless unit in a mobile terminal.
Fig. 3B is a block diagram of a wireless unit in a base station.
Fig. 4 is a timing chart showing the states of respective channels during HSDPA communication.
Fig. 5 is a first timing chart during which diversity reception is switched from ON to OFF.
Fig. 6 is a second timing chart during which diversity reception is switched from ON to OFF.
Fig. 7 is a first timing chart during which diversity reception is switched from OFF to ON.
Fig. 8 is a second timing chart during which diversity reception is switched from OFF to ON.

### Description of the Preferred Embodiments

Hereinafter, embodiments of the present invention are described in detail, referring to the drawings.

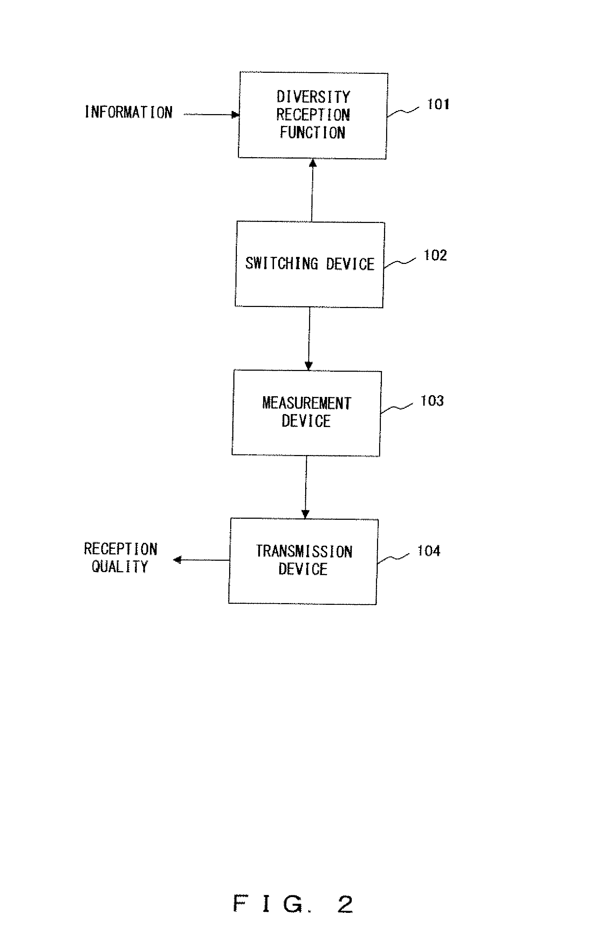

Fig. 2 is a diagram showing a principle of a communication apparatus embodying the present invention. The communication apparatus in Fig. 2 is equipped with a diversity reception function 101 using a plurality of reception systems for receiving, from a transmission apparatus, information corresponding to the reception quality. The communication apparatus comprises a switching device 102, a measurement device 103, and a transmission device 104.

The switching device 102 performs switching between a first state in which the diversity reception function 101 is active (ON) and a second state in which the diversity reception function 101 is inactive (OFF). The measurement device 103 performs, before the switching, measurement of the reception quality, and changes the measured value in accordance with the state after the switching. The transmission device 104 transmits the changed measured value to the transmission apparatus as the reported value of the reception quality.

The measurement device 103 changes the measured value, before the switching from the first state to the second state, for example, to a value smaller than the measured value; and chances the measured value, before the switching from the second state to the first state, for example, to a value larger than the measured value. Thus, the measured value (CQI value) of the reception quality to be reported to the transmission apparatus is changed, before the switching of the diversity reception function 101, to a value reflecting the state after the switching. Accordingly, appropriate information from the transmission apparatus can be received, even immediately after a rapid change of the state, in accordance with the rapid change of the reception gain.

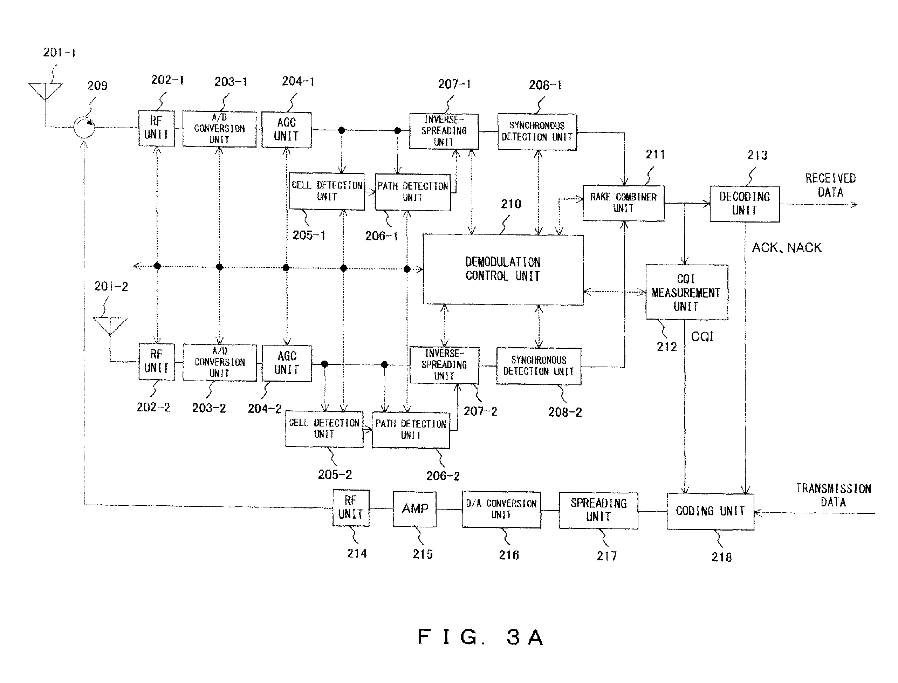

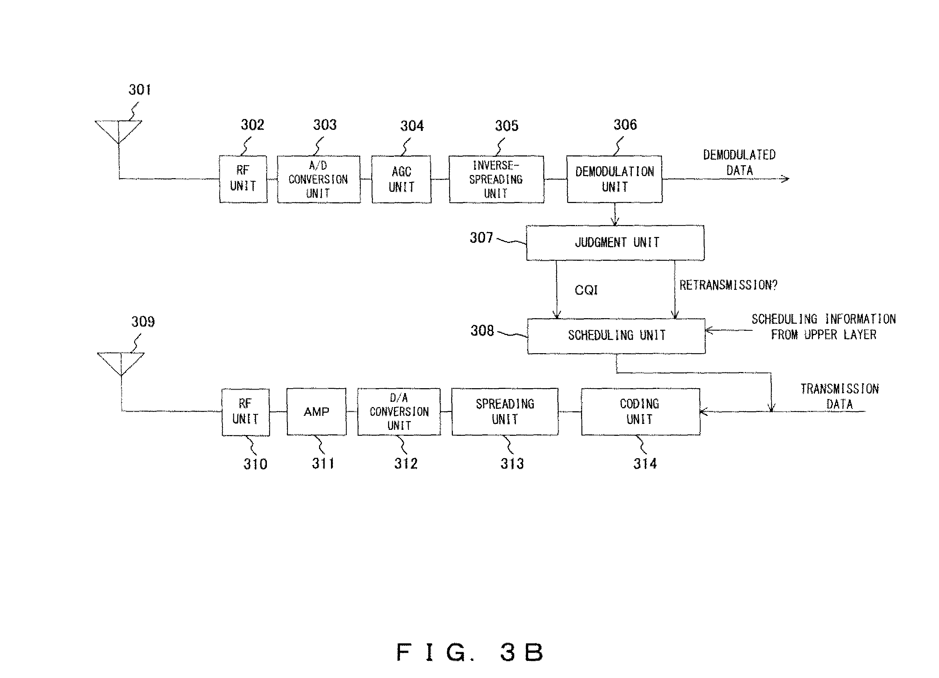

The communication apparatus in Fig. 2 corresponds to, for example, a mobile terminal in Fig. 3A described later; and the transmission apparatus corresponds to a base station in Fig. 3B described later. The switching device 102 corresponds to, for example, a demodulation control unit 210; the measurement device 103 corresponds to, for example, a CQI measurement unit 212; and the transmission device 104 corresponds to, for example, an antenna unit 201-1, in Fig. 3A.

According to the disclosed apparatus, the CQI value can be lowered in advance when switching the diversity reception from ON to OFF, so as to keep the error rate appropriate after the decrease of the reception gain. In addition, the CQI value can be increased in advance when switching the diversity reception from OFF to ON, so as to keep the error rate appropriate after the increase of the reception gain. Thus, the transmission power from the base station can be lowered to the required level to save the network resources, or, a user can benefit from an improved reception throughput.

In the wireless communication system according to the embodiment, the control to keep the error rate at an appropriate value is continuously performed by offsetting the CQI value in advance, thereby maintaining a constant reception quality. The control of the diversity reception is specifically performed as descried below.

### 1) When switching the diversity reception from ON to OFF

The mobile terminal lowers the CQI value measured in advance by a predetermined value before switching the diversity reception from ON to OFF, and reports the lowered value to the base station. The base station determines the format of HS-PDSCH on the basis of the CQI value reported from the mobile terminal, and transmits user data in the determined format. At this time, the reception gain of the mobile terminal is decreasing due to the switch-off of the diversity reception. However, the appropriate error rate can be maintained to avoid the degradation of the communication quality, since the HS-PDSCH has been formatted in anticipation of the state which diversity reception is switched off.

### 2) When switching diversity reception from OFF to ON

The mobile terminal increases the CQI value measured in advance by a predetermined value before switching the diversity reception from OFF to ON, and reports the increased value to the base station. The base station determines the format of HS-PDSCH on the basis of the CQI value reported from the mobile terminal, and transmits user data in the determined format. At this time, the reception gain of the mobile terminal is increasing due to the switch-on of the diversity reception. However, the appropriate error rate can be maintained to avoid excessive communication quality, since the HS-PDSCH has been formatted in anticipation of the state in which the diversity reception is switched on.

Fig. 3A shows an example of configuration of a wireless unit in a mobile terminal in such a wireless communication system as described above. The solid lines indicate data paths and the dotted lines indicate control paths.

The wireless unit comprises antennas 202-1 and 201-2, RF (Radio Frequency) units 202-1, 202-2, 214, A/D (Analog/Digital) conversion units 203-1 and 203-2, AGC (Automatic Gain Control) units 204-1 and 204-2, cell detection units 205-1 and 205-2, path detection units 206-1 and 206-2, an inverse-spreading units 207-1 and 207-2, synchronous detection units 208-1 and 208-2, a circulator 209, a demodulation control unit 210, a rake combiner unit 211, a CQI measurement unit 212, a decoding unit 213, an amplification unit (AMP) 215, a D/A (Digital/Analog) conversion unit 216, a spreading unit 217, and a coding unit 218.

The antenna 201-1, RF unit 202-1, A/D conversion unit 203-1, AGC unit 204-1, the cell detection unit 205-1, path detection unit 206-1, inverse-spreading unit 207-1, and synchronous detection unit 208-1 constitute a first reception system; and the antenna 201-2, RF unit 202-2, A/D conversion unit 203-2, AGC unit 204-2, the cell detection 205-2, path detection unit 206-2, inverse-spreading unit 207-2, and synchronous detection unit 208-2 constitute a second reception system. The antenna 201-1, RF unit 214, amplification unit 215, D/A conversion unit 216, spreading unit 217 and coding unit 218 constitute a transmission system.

The RF unit 202-i (i=1,2) demodulates an RF signal received by the antenna 201-i, and the A/D conversion unit 203-i converts the demodulated signal into a digital signal. The AGC unit 204-i performs an automatic gain control; the inverse-spreading unit 207-i performs an inverse-spreading process; and the synchronous detection unit 208-i performs a synchronous detection. At this time, the cell detection unit 205-i performs a cell search to detect the scramble code of the base station, and the path detection unit 206-i detects the timing of the inverse-spreading for the multi-path environment.

The rake combiner unit 211 performs a rake combination of multi-path signals received by the first and second reception systems; and the demodulation unit 213 performs error detection using CRC (Cyclic Redundancy Check) and outputs the result of the demodulation of the received data (ACK or NACK) to the coding unit 218. The CQI measurement unit 212 measures the CQI from the signal after the rake combination, and outputs the measured value to the coding unit 218.

The demodulation control unit 210 performs control to switch ON/OFF the diversity reception. When switching on the diversity reception, the power of the first and second reception systems are turned on and the rake combination is performed for the received signals in the two reception systems, according to the control. When switching off the diversity reception, the power of the second reception system is turned off, and the rake combination is performed only for the received signals in the first reception system.

The demodulation control unit 210 also instructs, before the switching of the diversity reception, the CQI measurement unit 212 to start the offset of CQI. In response to the instruction, the CQI measurement unit 212 increases or decreases the measured value of the CQI by a predetermined value, and outputs it to the coding unit 218. The timing to start the offset of CQI is calculated backward from the time on which the diversity reception is to be switched, on the basis of the time required for the CQI received by the base station to be reflected to HS-PDSCH.

The HS-DPCCH transmits the result of the demodulation of the received data and the CQI to the base station. At this time, the coding unit 218 codes the result of the demodulation of the received data and the CQI, and the spreading unit 217 performs a spreading process. The D/A conversion unit 216 converts the spread signal into an analog signal; the amplification unit 215 amplifies the transmission signal; and the RF unit 214 modulates the transmission signal. The obtained RF signal is transmitted from the antenna 201-1 via the circulator 209.

Fig. 3B shows an example of configuration of the wireless unit of a base station. The wireless unit comprises antennas 301 and 309, RF units 302 and 310, an A/D conversion unit 303, an AGC unit 304, an inverse-spreading unit 305, a demodulation unit 306, a judgment unit 307, a scheduling unit 308, an amplification unit (AMP) 311, a D/A conversion unit 312, a spreading unit 313, and a coding unit 314.

The antenna 301, RF unit 302, A/D conversion unit 303, AGC unit 304, inverse-spreading unit 305, and demodulation unit 306 constitutes a reception system. The antenna 309, RF unit 310, amplification unit 311, D/A conversion unit 312, spreading unit 313, and coding unit 314 constitutes a transmission system.

The RF unit 302 demodulates an RF signal received by the antenna 301, and the A/D conversion unit 303 converts the demodulated signal into a digital signal. The AGC unit 304 performs automatic gain control; the inverse-spreading unit 305 performs an inverse-spreading process; and the demodulation unit 306 demodulates the signal after the inverse-spreading.

The judgment unit 307 extracts information i.e., CQI, and ACK/NACK from the demodulated signal, and outputs the CQI to the scheduling unit 308. The judgment unit 307 further judges whether or not a retransmission is required, on the basis of the information (ACK/NACK), and outputs the judgment result to the scheduling unit 308. The scheduling unit 308 has a CQI table, and determines the format of transmission data on the basis of the CQI received from the judgment unit 307 and scheduling information specified by an upper layer.

The coding unit 314 codes the transmission data, and the spreading unit 313 performs a spreading process. The D/A conversion unit 312 converts the spread signal into an analog signal; the amplification unit 311 amplifies the transmission signal; and the RF unit 310 demodulates the transmission signal. The obtained RF signal is transmitted from the antenna 309.

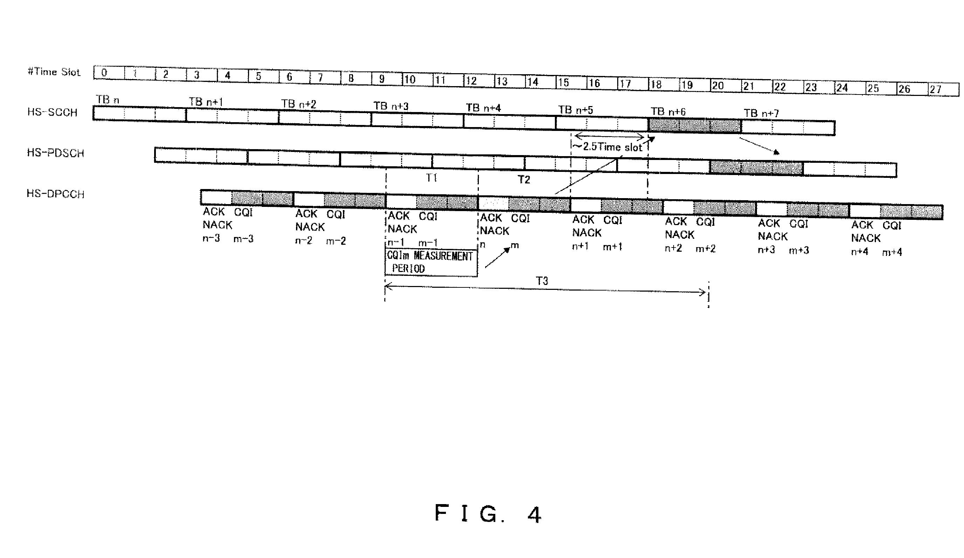

Next, a specific example of the diversity reception control in such a wireless communication system as described above is explained, referring to Fig. 4-Fig. 8.

Fig. 4 is a timing chart showing the relationship between the respective channels (HS-SCCH, HS-PDSCH, HS-DPCCH) in HSDPA. A mobile terminal receives control information included in TBn (an n-th transport block in the HS-SCCH) in #Time Slots 0-2, and receives and demodulates corresponding data in the HS-PDSCH in #Time Slots 2-4. In the time period T2 (about 7.5 slots after #Time Slot 4), the result of the demodulation (ACK/NACKn) and CQIm are transmitted from the HS-DPCCH to the base station. The value of the CQIm is the one measured in the time period T1 (immediately before T2).

CQI transmitted from the HS-DPCCH is reflected to control information in the downlink HS-SCCH within about 2.5 slots, and the demodulation of the data in the HS-PDSCH starts 2 slots later after the reflection, in accordance with the control information. In the example, the CQIm transmitted from the HS-DPCCH is reflected to TBn+6 in the HS-SCCH in #Time Slots 18-20, and further reflected to the data in the HS-PDSCH in #Time Slots 20-22. Therefore, the time T3 from when the measurement of the CQIm is started until when the CQIm is reflected to the HS-PDSCH is about 10.5 slots.

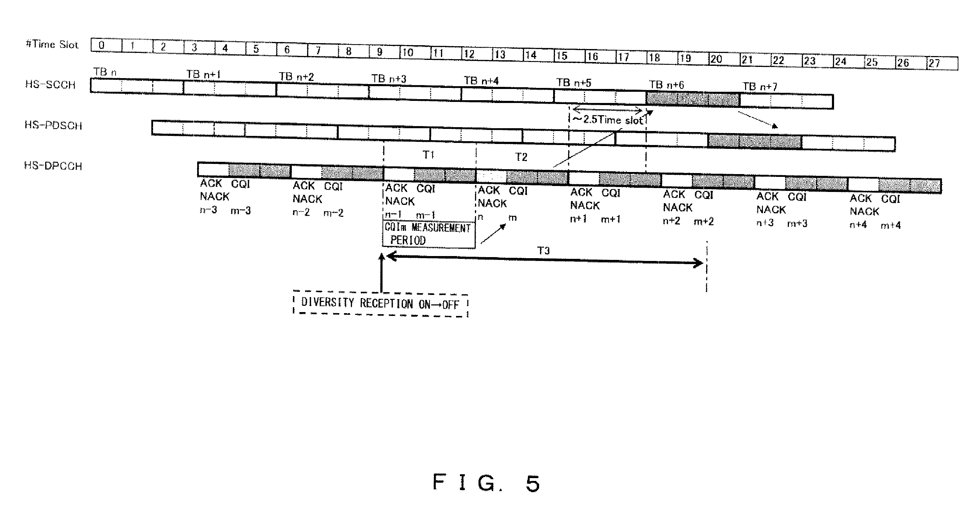

Fig. 5 is a timing chart during which the diversity reception is switched from ON to OFF. When switching the diversity reception from ON to OFF at the same time as the start of the measurement of the CQIm in #Time Slot 9, about 7 slots are required for the measured CQIm to be reflected the HS-PDSCH in accordance with the decreasing gain. For this reason, without the CQI offset, imbalance between the CQI reflected to the HS-PDSCH and the demodulation capability of the mobile terminal occurs in the time period T3, causing BLER of the HS-PDSCH to deteriorate due to the increase of demodulation errors.

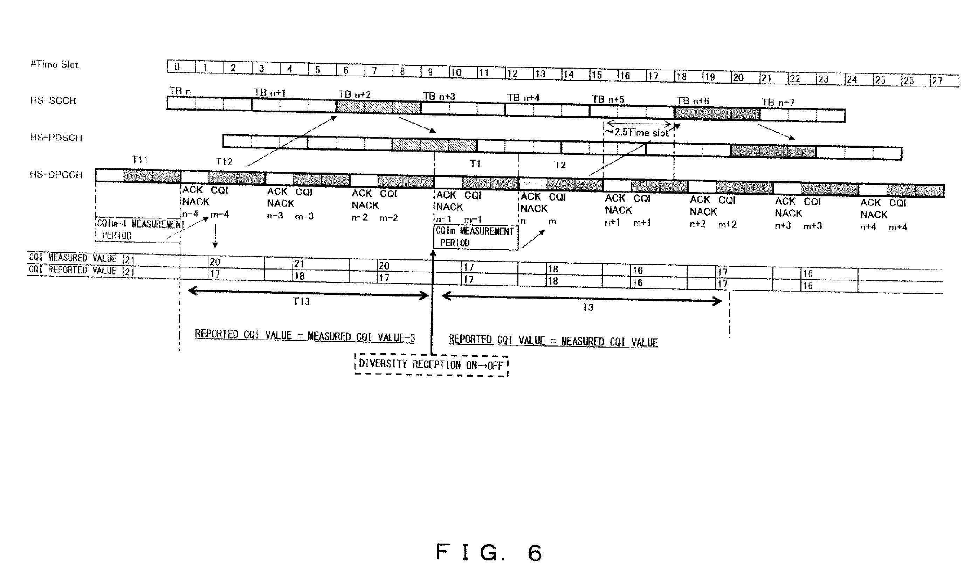

Fig. 6 shows an example of CQI offset performed in the timing chart in Fig. 5. The mobile terminal lowers the measured valve of CQI by a predetermined value (for example, 3dB) and reports it to the base station, from when the measurement of the CQI starts at 9 slots before the time on which the diversity reception is to be switched from ON to OFF until when the diversity reception is actually switched from ON to OFF. Therefore, when the value of CQlm-4 measured in the period T11 is 20 dB, 17 dB (lowered by 3dB from the measured value) is transmitted to the base station as the reported value in the period T12.

The CQlm-4 is reflected to TBn+2 in the HS-SCCH and reflected further to data in the HS-PDSCH in #Time Slots 8-10. Therefore, even if the diversity reception is switched off in #Time Slot 9 and the measured value of CQI decreases to 17dB, appropriate communication quality can be maintained since the demodulation process reflecting the decrease of the CQI has been performed.

Thus, in the period T13 before the switching of the diversity reception, the reported value that is smaller than the measured value by 3dB is transmitted to the base station. After the switching of the diversity reception, the reported value equivalent to the measured value is reported to the base station. In this case, the number of demodulation errors does not increase in the period T3 after the switching of the diversity reception, because the CQI reflected to the HS-PDSCH and the demodulation capability of the mobile terminal are balanced.

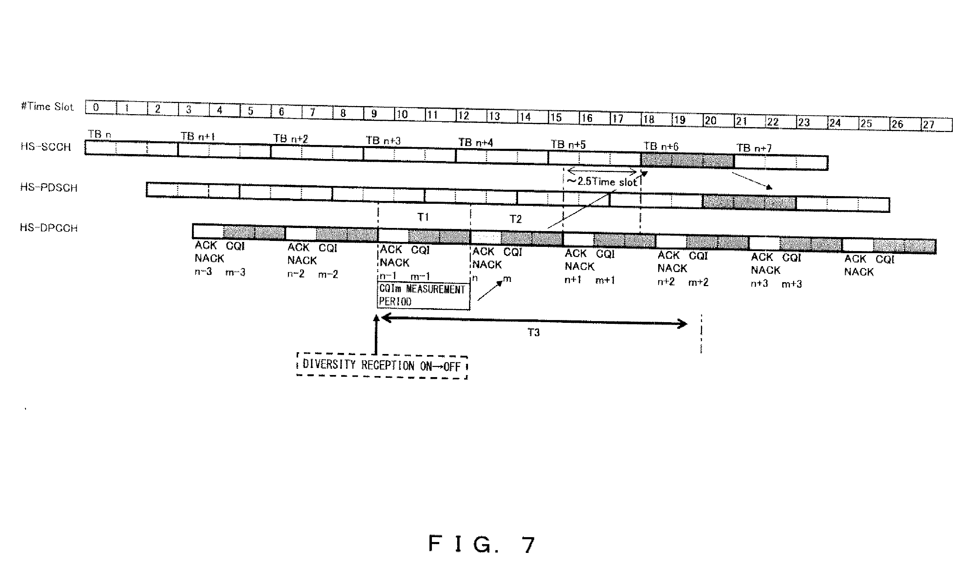

Fig. 7 is a timing chart during which the diversity reception is switched from OFF to ON. When the diversity reception is switched from OFF to ON at the same time as the start of the measurement of CQIm in #Time Slot 9, it takes about 7 slots for the measured CQIm to be reflected to the HS-PDSCH in accordance with the gain increase. For this reason, without the CQI offset, imbalance between the CQI reflected to the HS-PDSCH and the demodulation capability of the mobile terminal occurs in the time period T3, resulting in excessive communication quality.

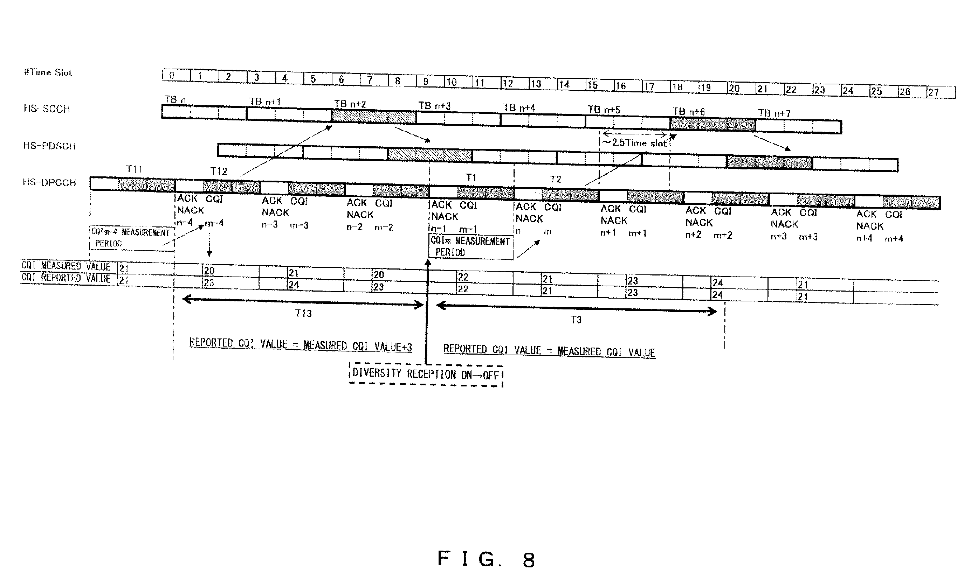

Fig. 8 shows an example of CQI offset performed in the timing chart in Fig. 7. The mobile terminal increases the measured valve of CQI by a predetermined value (for example, 3dB) and reports it to the base station, from when the measurement of the CQI starts at 9 slots before the time on which the diversity reception is to be switched from OFF to ON until when the diversity reception is actually switched from OFF to ON. Therefore, when the value of CQIm-4 measured in the period T11 is 20 dB, 23 dB (increased by 3dB from the measured value) is transmitted to the base station as the reported value in the time period T12.

The CQIm-4 is reflected to TBn+2 in the HS-SCCH and reflected further to data of the HS-PDSCH in #Time Slots 8-10. Therefore, even if the diversity reception is switched on in #Time Slot 9 and the measured value of CQI Increases to 22dB, appropriate communication quality can be maintained, since the demodulation process reflecting the increase of the CQI has been performed.

Thus, in the period T13 before the switching of the diversity reception, the reported value that is larger than the measured value by 3dB is transmitted to the base station. After the switching of the diversity reception, the reported value equivalent to the measured value is reported to the base station. In this case, the communication quality is not excessive in the period T3 after the switching of the diversity reception, because the CQI reflected to the HS-PDSCH and the demodulation capability of the mobile terminal are balanced.

Meanwhile, the value used by the mobile terminal for the CQI offset is determined, for example, by using one of the following methods 1) -4).
1) An initial value (for example, 3dB) is set in advance. When the diversity reception is switched for the first time, the difference between the actual measured values of CQI measured before and after the switching is obtained, and the difference is used as the offset value when the diversity reception is switched for the second time and beyond. Assuming the measured values of CQI as CQI (ON) (when the diversity reception is on) and CQI (OFF) (when the diversity reception is off), the value for CQI offset is calculated by using the following equation.
   Offset=CQI(ON)-CQI(OFF)
2) The diversity reception gain of the mobile terminal may change over time. Therefore, when using a value of the diversity reception gain calculated in the past as the offset as described in 1) above, the offset may be reset to the initial value after a predetermined period of time has passed, and the difference between the measured value of the may be calculated again.
3) In the method described in. 1) above, when the value of the calculated offset is relatively large (for example, 10dB), the value may be a result of some fluctuation in the measurement. Therefore, threshold values may be determined for the offset value. For example, assuming the calculated offset value as A, 3≤A≤8 can be set as the range for determining the value to be adopted.
4) When the switching of diversity reception is repeated within a short period of time at a certain place, the average value of the offset values calculated with each switching using the method in 1) may be obtained, and the average value may be used as the actual offset value.

While the above embodiment describes reception diversity control in a mobile terminal having two reception systems, similar control can be applied to mobile terminals having three or more reception systems. In addition, the similar control can be performed not only in a mobile terminal but also in other types of communication apparatuses equipped with reception diversity function.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A communication apparatus equipped with diversity reception function (101) using a plurality of reception systems (201-1 through 208-1, 201-2 through 208-2) for receiving, from a transmission apparatus, information corresponding to reception quality, comprising:
a switching device (102, 210) for performing switching between a first state in which the diversity reception function is active and a second state in which the diversity reception function is inactive;
a measurement device (103, 212) for performing, before the switching, measurement of the reception quality, and changing a measured value obtained by the measurement in accordance with a state after the switching; and
a transmission device (104, 201-1) for transmitting the changed measured value to the transmission apparatus as a reported value of the reception quality.

2. The communication apparatus according to claim 1, wherein
the measurement device changes the measured value obtained by the measurement, before switching from the first state to the second state, to a value smaller than the measured value.

3. The communication apparatus according to claim 1 or 2, wherein
the measurement device changes the measured value obtained by the measurement, before switching from the first state to the second state, by subtracting from the measured value a difference between a value of the reception quality measured in the first state and a value of the reception quality measured in the second state.

4. The communication apparatus according to claim 2 or 3, wherein
the measurement device changes the measured value obtained by the measurement, when the difference between the values of the reception quality measured in the first state and the second state is larger than a first threshold value and smaller than a second threshold value, by using the difference between the values.

5. The communication apparatus according to claim 2 or 3, wherein
the measurement device calculates an average value of the differences between values of the reception quality measured at a plurality of times, and changes the measured value obtained by the measurement by using the average value.

6. The communication device according to claim 1, wherein
the measurement device changes the measured value obtained by the measurement, before switching from the second state to the first state, to a value larger than the measured value.

7. The communication device according to claim 1 or 6, wherein
the measurement device changes the measured value obtained by the measurement, before the switching from the second state to the first state, by adding to the measured value a difference between a value of the reception quality measured in the first state and a value of the reception quality measured in the second state.

8. The communication device according to claim 7, wherein
the measurement device changes the measured value obtained by the measurement, when the difference between the values of the reception quality measured in the first state and the second state is larger than a first threshold value and smaller than a second threshold value, by using the difference between the values.

9. The communication device according to claim 6 or 7, wherein
the measurement device calculates an average value of the differences between values of the reception quality measured at a plurality of times, and changes the measured value obtained by the measurement by using the average value.

10. A method for controlling diversity reception function (101) of a communication apparatus equipped with the diversity reception function using a plurality of reception systems (201-1 through 208-1, 201-2 through 208-2) for receiving, from a transmission apparatus, information corresponding to reception quality, comprising:
performing measurement (103, 212) of the reception quality before switching between a first state in which the diversity reception function is active and a second state in which the diversity reception function is inactive;
changing a measured value obtained by the measurement in accordance with a state after the switching;
transmitting (104, 201-1) the changed measured value to the transmission apparatus as a reported value of the reception quality; and
switching (102, 210) between the first state and the second state.
